# EUROPÄISCHE PATENTSCHRIFT

(11) **EP 0 706 470 B1**
(45) Veröffentlichungstag und Bekanntmachung des Hinweises auf die Patenterteilung: **14.05.1997**
(21) Anmeldenummer: 94922863.9
(22) Anmeldetag: 22.06.1994
(51) Int. Cl.: B63B 19/12, F16C 33/20

(54) **GLEITLAGER INSBESONDERE FÜR LUKENDECKEL AN BORD VON SCHIFFEN**
SLIDE BEARING, IN PARTICULAR FOR HATCHWAY COVERS ON BOARD OF SHIPS
PALIER LISSE, NOTAMMENT POUR LE PANNEAU DE CALE A BORD DE NAVIRES

(30) Priorität: 07.07.1993 DE 9310059 U; 14.10.1993 DE 9315675 U
(43) Veröffentlichungstag der Anmeldung: 17.04.1996
(73) Patentinhaber: Macor Marine Systems International Gmbh, D-28329 Bremen (DE)
(72) Erfinder: ALBERTS, Enno, D-22303 Hamburg (DE)
(74) Vertreter: Eisenführ, Speiser & Partner
(86) Internationale Anmeldenummer: EP9402044
(87) Internationale Veröffentlichungsnummer: WO9501903

(56) Entgegenhaltungen:
- EP-A- 0 327 012
- DE-A- 2 643 064
- DE-A- 2 826 443
- DE-A- 3 308 376
- DE-B- 2 600 857
- US-A- 5 085 520

## Beschreibung

Die Erfindung betrifft ein Gleitlager zur Übertragung hoher Lagerkräfte bei geringen und langsamen Relativbewegungen zwischen den Lagerpartnern, insbesondere als Auflager für Lukendeckel o. dgl. an Bord von Schiffen, bestehend aus einem Lagerbock mit im wesentlichen ebener Lagerfläche und einem Auflagerklotz, dessen Lagerfläche mit der Lagerfläche des Lagerbocks in im wesentlichen flächigem Kontakt steht, wobei in den Lagerbock oder den Auflagerklotz Stäbe aus reibungsminderndem Werkstoff etwa senkrecht zur Lagerfläche eingelassen sind und sich mindestens bis zur Lagerfläche erstrecken.

Es ist allgemein bekannt, daß die Beherrschung hoher Lagerkräfte insbesondere dann schwierig ist, wenn sie mit langsamen Relativbewegungen zwischen den Lagerpartnern einhergehen. Eine derartige Situation liegt beispielsweise bei der Auflagerung von Lukendeckeln auf der die Luke umgebenden Süllbank vor. Namentlich moderne Frachtschiffe für den Containertransport haben viele und große Luken, deren Öffnungen die Aussteifung des Schiffskörpers durch das Deck schwächen und damit die Verwindungssteifigkeit des Schiffskörpers deutlich herabsetzen. Da die die Lukenöffnungen überspannenden Lukendeckel aus Festigkeitsgesichtspunkten in der Regel so steif konstruiert sind, daß sie sich nicht den Verformungen des Schiffskörpers anpassen, müssen sie in der Lage sein, sich gegenüber dem Deck (d.h. der Süllbank) zu bewegen; das Deck schiebt sich also bei den im Seegang auftretenden Verformungen gewissermaßen unter dem Lukendeckel hin und her.

Die Verschiebewege sind dabei nicht groß, und das gleiche gilt für die Geschwindigkeit, mit der die Relativbewegung zwischen dem Lukendeckel und der Süllbank stattfindet. Zugleich müssen die Auflager, die zwischen dem Lukendeckel und der Süllbank angeordnet sind, und die jene Relativbewegungen ermöglichen sollen, erhebliche Normalkräfte (senkrecht zu den Lagerflächen wirkend) übertragen, weil derartige Frachtschiffe regelmäßig mit Decksfracht auf den Lukendeckeln - beispielsweise Containern - gefahren werden.

Im Stand der Technik sind - am Umfang des Lukendeckels verteilt mehrere - Gleitlager aus jeweils einem an der Süllbank befestigten Lagerbock und einem am Lukendeckel befestigten Auflagerklotz bekannt, die mit ebenen, horizontal verlaufenden Lagerflächen aufeinanderliegen. Um den Reibfaktor zwischen den Lagerflächen zu verringern, werden im allgemeinen unterschiedliche Werkstoffe für den Lagerbock einerseits und den Auflagerklotz andererseits verwendet oder diese mit Platten aus solchen Werkstoffen versehen. Gleichwohl hat sich in der Praxis herausgestellt, daß insbesondere bei großen Lukenweiten hohe Reibungskräfte zwischen den Lagerflächen auftreten, weil die wirksamen Reibungskoeffizienten aufgrund unterschiedlicher Umstände größer sind als von der Materialpaarung im Gleitlager zu erwarten wäre. Die Folge der als Horizontalkräfte in die Lukendeckel und die Süllbänke eingeleiteten Reibungskräfte sind nicht selten Risse im Lukendeckel und/oder dem Süllbereich der Luke.

Dem Problem des hohen Reibungsfaktors und der dadurch bei Relativbewegungen zwischen Schiffsdeck und Lukendeckel - aufgrund der großen Lukendeckel-Belastung - auftretenden hohen Horizontalkräfte begegnet ein Gleitlager gemäß der DE-A-26 43 064, die den nächstkommenden Stand der Technik bildet, von dem die Erfindung ausgeht, wobei in den Lagerbock oder den Auflagerklotz Stäbe aus reibungsminderndem Werkstoff etwa senkrecht zur Lagerfläche eingelassen sind und sich mindestens bis zur Lagerfläche erstrecken. Diese Anordnung von Gleitwerkstoffen besitzt nicht den Nachteil des starken Abriebs und raschen Abtragens, der beim bekannten flächigen Auftragen (in Form von Platten, Überzügen etc.) von Gleitwerkstoffen auf den Lagerbock und/oder den Auflagerklotz beobachtet wurde.

In der Praxis hat sich jedoch als nachteilig herausgestellt, daß im Laufe der Zeit die reibungsmindernde Wirkung bei dem vorbeschriebenen bekannten Gleitlager abnimmt, was insbesondere aus einem unerwünschten Abtrag von reibungsminderndem Werkstoff der Stäbe von der Lagerfläche resultierte.

Es ist deshalb Aufgabe der Erfindung, das bekannte Gleitlager derart zu verbessern, daß die reibungsmindernde Wirkung im wesentlichen während der gesamten Betriebsdauer erhalten bleibt.

Diese Aufgabe wird dadurch gelöst, daß bei einem Gleitlager der eingangs genannten Art der die Lagerfläche aufweisende Außenseitenabschnitt des Lagerbockes oder Auflagerklotzes im wesentlichen von einem vorstehenden Rand umgeben ist.

Der erfindungsgemäß vorgesehene vorstehende Rand bildet einen die Lagerfläche umgebenden randseitigen Rahmen, der verhindert, daß bei einer Belastung des Lagers der reibungsmindernde Werkstoff der Stäbe von der Lagerfläche entweichen kann. Auf diese Weise wird die reibungsmindernde Wirkung des erfindungsgemäßen Gleitlagers im wesentlichen erhalten.

Besonders vorteilhaft wirkt sich die erfindungsgemäße Anordnung bei denjenigen Ausführungen aus, bei welchen die Stäbe über den Außenseitenabschnitt vorstehen, und zwar insbesondere so weit, daß nach einer ersten Belastung des Lagers der Außenseitenabschnitt im wesentlichen vollständig vom reibungsmindernden Werkstoff der Stäbe bedeckt wird. In diesem Fall bildet der vorstehende Rand eine Kammerung für den reibungsmindernden Werkstoff. Dieser Ausführung liegt die Überlegung zugrunde, möglichst großflächig reibungsmindernden Werkstoff an der Lagerfläche vorzusehen, welcher durch die in den Lagerbock oder Auflagerklotz eingelassenen Stäbe formschlüssig an seinem Platz gehalten wird.

Als Material der Stäbe hat sich glasfaserverstärktes oder mit Glaspulver vermischtes Polytetrafluorethylen (PTFE) als besonders geeignet erwiesen, wobei das Polytetrafluorethylen mit ca. 25 Vol.-% Glas versetzt sein kann.

Eine gegenwärtig besonders bevorzugte Ausführung zeichnet sich dadurch aus, daß die Stäbe aus reibungsminderndem Material im Querschnitt kreisrund sind und am die Lagerfläche aufweisenden Außenseitenabschnitt des Lagerbockes oder Auflagerklotzes Bohrungen vorgesehen sind, in die die Stäbe eingesetzt sind.

Vorzugsweise sollten die Bohrungen im Bereich ihrer Lagerflächen-Öffnung etwas angefast oder mit deren Durchmesser erweiternden, in den Außenseitenabschnitt mündenden, abgerundeten Rändern versehen sein, so daß bei Auftreten von Reibungskräften die Stäbe dort nicht allzu exzessiven Scherspannungen ausgesetzt werden und die Gefahr einer Beschädigung der Stäbe durch solche Scherspannungen erheblich reduziert, zumindest jedoch deutlich eingeschränkt wird. Solche Scherspannungen treten im übrigen nicht nur durch die Reibungskräfte zwischen den beiden Lagerpartnern auf, sondern auch dann, wenn einmal unbeabsichtigt ein Fremdkörper zwischen die Lagerflächen der beiden Lagerpartner geraten sollte. In diesem Fall wirken sich die störenden Einflüsse des Fremdkörpers nur begrenzt dort aus, wo er die Lagerflächen berührt.

Zweckmäßigerweise sollten die Bohrungen als Sacklöcher ausgebildet sein.

Vorzugsweise sollte der andere Lagerpartner eine von einer Stahllegierung gebildete Lagerfläche aufweisen, während der die Stäbe enthaltende Lagerpartner aus einer Bronzelegierung besteht. Die von der Stahllegierung gebildete Lagerfläche kann geschliffen und/oder gehärtet sein. Gleichwohl sind auch andere Materialien denkbar.

Die Stäbe sollten zweckmäßigerweise in senkrecht zur (bevorzugten) Bewegungsrichtung verlaufenden Reihen angeordnet sein, wobei die Stäbe benachbarter Reihen um das halbe Teilungsmaß gegeneinander versetzt sind.

Nachfolgend werden bevorzugte Ausführungsbeispiele eines Lagerbockes, der mit einem herkömmlichen (nicht dargestellten) Auflagerklotz zusammenwirkt, anhand der beiliegenden Zeichnungen näher erläutert.
Es zeigen:
- Figur 1: eine erste Ausführung des Lagerbockes in Draufsicht;
- Figur 2: einen Querschnitt durch die erste Ausführung des Lagerbockes gemäß Linie II-II in Figur 1;
- Figur 3: einen Querschnitt entsprechend der Linie II-II von Figur 1 durch eine zweite Ausführung des Lagerbockes;
- Figur 4: eine dritte Ausführung des Lagerbockes in Draufsicht;
- Figur 5: einen Querschnitt durch die dritte Ausführung des Lagerbockes gemäß der Linie V-V in Figur 4;
- Figur 6: einen Querschnitt durch die dritte Ausführung des Lagerbockes gemäß der Linie VI-VI in Figur 4;
- Figur 7: ein Detail von Figur 5;
- Figur 8: einen Querschnitt durch die dritte Ausführung des Lagerbockes gemäß der Linie V-V in Figur 4 mit eingesetzten Stäben vor einer ersten Belastung; und
- Figur 9: einen Querschnitt durch die dritte Ausführung des Lagerbockes gemäß der Linie V-V in Figur 4 mit eingesetzten Stäben nach einer ersten Belastung.

Die in den Figuren dargestellten Lagerböcke können im Falle eines Einsatzes auf Schiffen am Lukendeckel befestigt sein und als Auflager des Lukendeckels auf der Süllbank dienen. Es ist auch denkbar, derartige Lagerböcke an der Süllbank zu befestigen, so daß diese als Auflager für Lukendeckel dienen. Gleichwohl sei an dieser Stelle betont, daß die dargestellten Lagerböcke als Teil eines Gleitlagers auch für andere Anwendungsfälle eingesetzt werden können.

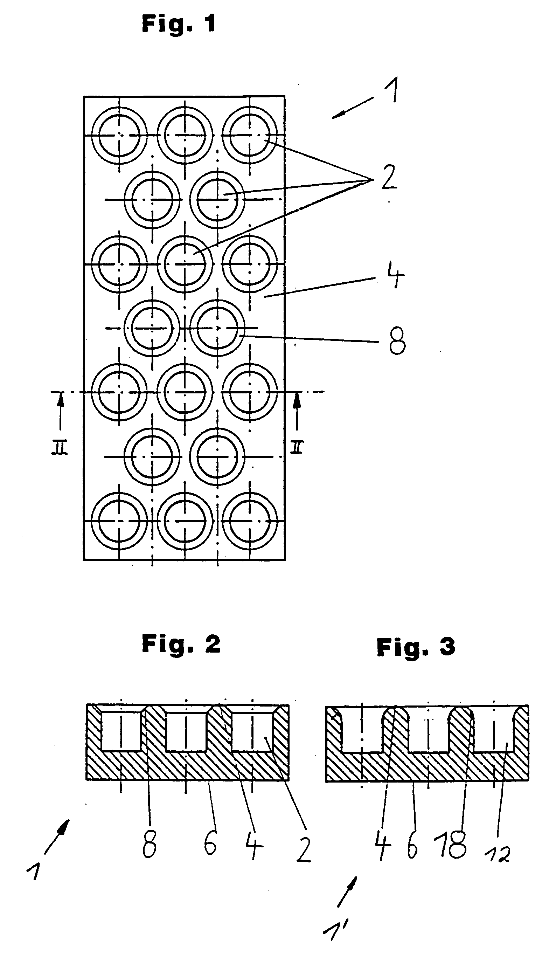

In den Figuren 1 und 2 ist eine erste bevorzugte Ausführung eines Lagerbockes 1 dargestellt.

Der im wesentlichen quaderförmige Lagerbock 1 weist eine Vielzahl von Bohrungen 2 auf, die in zueinander beabstandeten, parallelen Reihen angeordnet sind, in denen abwechselnd drei oder zwei Bohrungen 2 angeordnet sind. Die Bohrungen benachbarter Reihen sind dabei um das halbe Teilungsmaß gegeneinander versetzt. Der Abstand der Mittelpunkte der Bohrungen 2 einer Reihe beträgt in diesen Ausführungsbeispiel 13 mm und jeweils benachbarte Reihen haben einen Abstand von 12,5 mm zueinander. Der Durchmesser der Bohrungen 2 beträgt 8 mm. Der Lagerbock 1 weist eine Länge von 90 mm und eine Breite von 40 mm auf, so daß sich insgesamt sieben Reihen ergeben.

In Figur 2 ist der Lagerbock 1 im Schnitt entlang der in Figur 1 eingetragenen Linie II-II abgebildet. Die als Sacklöcher ausgebildeten Bohrungen 2 erstrecken sich von der Oberseite 4 in Richtung auf die Unterseite 6 des Lagerbocks 1 und weisen im vorliegenden Ausführungsbeispiel eine Tiefe von 9 mm auf. Der Lagerbock 1 hat im vorliegenden Ausführungsbeispiel eine Höhe von 14,5 mm. Die Bohrungen 2 sind zur Oberseite 4 des Lagerbocks 1 erweiternd angefast, wobei die Fasen 8 in einem Winkel von 45° in bezug auf die Oberseite 4 des Lagerbocks 1 verlaufen und eine Tiefe von etwa 1,5 mm aufweisen. Die untere Begrenzungsfläche der Bohrungen 2 ist eben.

In Figur 3 ist eine zweite Ausführung 1' dargestellt, die sich von der zuvor beschriebenen ersten Ausführung dadurch unterscheidet, daß die Bohrungen 12 im Gegensatz zu den Bohrungen 2 der ersten Ausführung mit den Durchmesser erweiternden, in die Oberseite 4 mündenden, abgerundeten Rändern 18 versehen sind. Wie aus Figur 3 ersichtlich ist, verlaufen die abgerundeten Ränder 18 im vorliegenden Ausführungsbeispiel in einem Viertelkreis, wobei der Radius vorzugsweise etwa 2,5 mm betragen sollte.

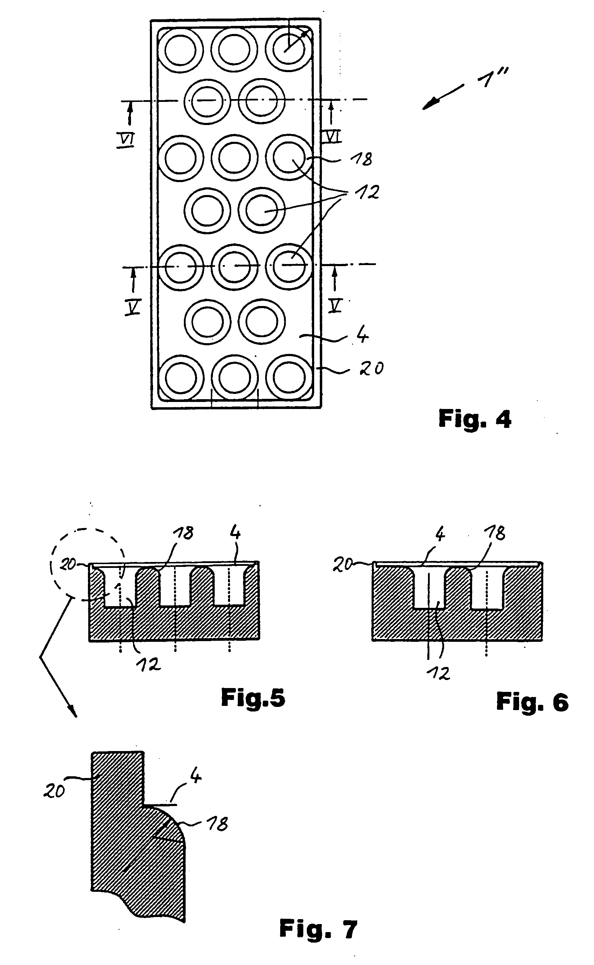

Die in den Figuren 4 bis 7 dargestellte dritte Ausführung 1'' unterscheidet sich von der zweiten Ausführung 1' dadurch, daß die Oberseite 4 von einem vorstehenden Rand 20 umgeben ist. Bei der Herstellung des Lagerbockes 1'' kann der vorstehende Rand 20 beispielsweise dadurch ausgebildet werden, daß an der Oberseite 4 des Lagerbockes 1'' eine Vertiefung mit einer Tiefe entsprechend der Höhe des vorstehenden Randes 20 eingefräst wird. Die Höhe des vorstehenden Randes 20 sollte vorzugsweise 1 bis 2 mm betragen. Die übrigen Maße sind gegenüber denen der ersten und zweiten Ausführungen im wesentlichen unverändert geblieben.

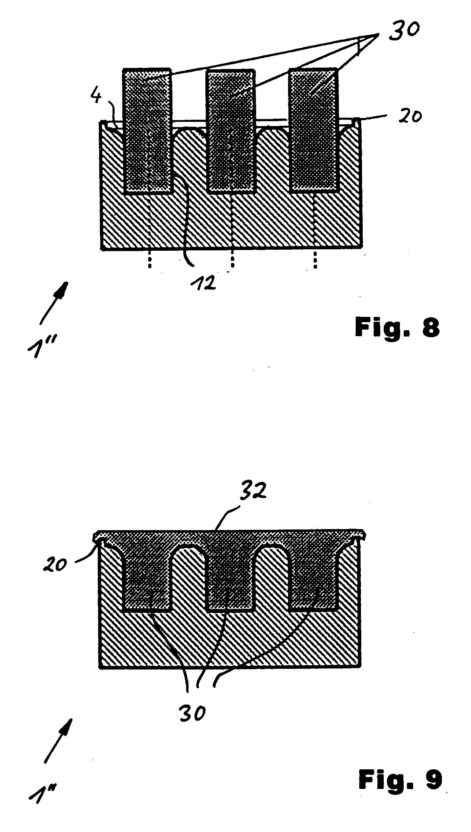

In die Bohrungen 2 und 12 der zuvor beschriebenen Ausführungen 1, 1' und 1'' sind Stäbe aus reibungsminderndem Werkstoff eingelassen, deren Stabachsen sich entsprechend der Bohrungsanordnung senkrecht zur Oberseite 4 und damit senkrecht Zur Lagerfläche erstrecken. In Figur 8 ist dies beispielhaft für die dritte Ausführung 1'' dargestellt, in deren Bohrungen 12 Stäbe 30 angeordnet sind.

Die Stäbe bestehen aus glasfaserverstärktem oder mit Glaspulver vermischtem Polytetrafluorethylen (PTFE), welches vorzugsweise mit ca. 25 Vol.-% Glas versetzt ist. Die Stäbe weisen eine Form auf, die der der Bohrungen 2 bzw. 12 entspricht, so daß letztere vollständig und ohne verbleibende Hohlräume ausgefüllt sind. Vorzugsweise haben die Stäbe und die Bohrungen jeweils einen kreisförmigen Querschnitt.

Die Stäbe sind in den Bohrungen 2 bzw. 12 so angeordnet, daß sie zumindest geringfügig über die Oberseite 4 des Lagerbockes hervorstehen. Dadurch bleibt gewährleistet, daß sich der den anderen Lagerpartner des Gleitlagers bildende Auflagerklotz stets in Berührung mit den Stirnflächen der Stäbe befindet, welche die Lagerfläche bilden. Für eine solche Anordnung der Stäbe eignen sich besonders die zuvor beschriebenen Ausführungen 1 und 1'. Bei diesen Ausführungen sollten die Stäbe mindestens 1,5 mm bis 2 mm über die Oberseite 4 des Lagerbockes 1 bzw. 1' hervorstehen.

Es hat sich aber auch als besonders zweckmäßig erwiesen, den Überstand der Stäbe über der Oberseite 4 so zu wählen, daß nach einer ersten Belastung des Gleitlagers der Werkstoff des überstehenden Teils der Stäbe zur Seite verpreßt wird und die Oberseite 4 im wesentlichen vollständig bedeckt. In diesem Fall wird die Lagerfläche von der Oberfläche des die Oberseite 4 bedeckenden Werkstoffes der Stäbe gebildet. Auch wenn für eine solche Ausbildung der Lagerfläche die Ausführungen 1 und 1' durchaus infrage kommen könnten, eignet sich hierfür insbesondere die Ausführung 1''. Bei dieser Ausführung 1'' verhindert nämlich der vorstehende Rand 20, daß der verpreßte Werkstoff der Stäbe 30 von der Oberseite 4 seitlich entweichen kann. Während in Figur 8 die Ausführung 1'' mit bereits eingesetzten Stäben 30 vor einer ersten Belastung gezeigt ist, ist in Figur 9 die Situation nach der ersten Belastung und dem daraus resultierenden Verpressen der Überstände der Stäbe 30 dargestellt.

Bei der Anordnung gemäß Figur 9 füllt der verpreßte Werkstoff des ehemals überstehenden Teils der Stäbe 30 die vom vorstehenden Rand 20 auf der Oberseite 4 gebildete "Kammerung" vollständig aus und bedeckt mit seiner die Lagerfläche bildenden Oberfläche 32 sogar zusätzlich noch den vorstehenden Rand 20. Dadurch wird vermieden, daß der vorstehende Rand 20 in Berührung mit dem anderen Lagerpartner gelangt. Der Reserveüberstand, d.h. der Abstand zwischen der Oberseite des vorstehenden Randes 20 und der Oberfläche 32, sollte bei dieser Ausführung jedoch verhältnismäßig gering sein; der Reserveüberstand sollte vorzugsweise mindestens 0,5 mm betragen und kann für eine einbaufertige Konstruktion in Abhängigkeit vom Belastungsgrad vorzugsweise auch mit 1 bis 2 mm gewählt werden. Um die in Figur 9 dargestellte Anordnung zu erzielen, sollte der Überstand der Stäbe 30 vor der ersten Belastung gemäß Figur 8 vorzugsweise mindestens 5 mm betragen.

Der dem Lagerbock 1, 1' bzw. 1'' gegenüberliegende andere Lagerpartner (Auflagerklotz oder Lagerbock) weist eine von einer Stahllegierung gebildete Lagerfläche auf, welche vorzugsweise geschliffen ist. Die hierfür gewählte Stahllegierung sollte eine nichtrostende Stahllegierung sein und/oder gehärtet sein. Der andere Lagerpartner kann beispielsweise aus einem normal festen, schiffbauüblichen Stahl angefertigt werden. Der Lagerbock 1, 1' bzw. 1'' besteht vorzugsweise aus Bronze; er kann aber auch aus Stahl hergestellt sein. In den Bohrungen 2 bzw. 12 kann ein Gleitzusatzstoff aus Kunststoff versenkt werden, um ein Fügen von Kunststoff und Metall zu verhindern. Der Gleitzusatzstoff wird bei der ersten Belastung fest in die Bohrungen 2 bzw. 12 hineingepreßt, so daß er sich nicht mehr selbständig löst.

## Patentansprüche

1. Gleitlager zur Übertragung hoher Lagerkräfte bei geringen und langsamen Relativbewegungen zwischen den Lagerpartnern, insbesondere als Auflager für Lukendeckel o. dgl. an Bord von Schiffen, bestehend aus einem Lagerbock (1; 1'; 1'') mit im wesentlichen ebener Lagerfläche und einem Auflagerklotz, dessen Lagerfläche mit der Lagerfläche des Lagerbocks (1; 1'; 1'') in im wesentlichen flächigem Kontakt steht, wobei in den Lagerbock (1; 1'; 1'') oder den Auflagerklotz Stäbe (30) aus reibungsminderndem Werkstoff etwa senkrecht zur Lagerfläche eingelassen sind und sich mindestens bis zur Lagerfläche erstrecken,
dadurch gekennzeichnet, daß der die Lagerfläche aufweisende Außenseitenabschnitt (4) des Lagerbockes (1'') oder Auflagerklotzes im wesentlichen von einem vorstehenden Rand (20) umgeben ist.

2. Gleitlager nach Anspruch 1,
dadurch gekennzeichnet, daß die Stäbe (30) über den die Lagerfläche aufweisenden Außenseitenabschnitt (4) des Lagerbockes (1'') oder Auflagerklotzes derart vorstehen, daß nach einer ersten Belastung des Gleitlagers der Außenseitenabschnitt (4) einschließlich des vorstehenden Randes (20) im wesentlichen vollständig vom Werkstoff der Stäbe (30) bedeckt ist, so daß dieser die Lagerfläche bildet.

3. Gleitlager nach Anspruch 1 oder 2,
dadurch gekennzeichnet, daß die Stäbe (30) aus glasfaserverstärktem Polytetrafluorethylen (PTFE) bestehen.

4. Gleitlager nach Anspruch 1 oder 2,
dadurch gekennzeichnet, daß die Stäbe (30) aus mit Glaspulver vermischtem Polytetrafluorethylen (PTFE) bestehen.

5. Gleitlager nach Anspruch 3 oder 4,
dadurch gekennzeichnet, daß das Polytetrafluorethylen mit ca. 25 Vol.-% Glas versetzt ist.

6. Gleitlager nach mindestens einem der Ansprüche 1 bis 5,
dadurch gekennzeichnet, daß die Stäbe (30) rund sind und am die Lagerfläche aufweisenden Außenseitenabschnitt (4) des Lagerbockes (1; 1'; 1'') oder Auflagerklotzes Bohrungen (2; 12) vorgesehen sind, in die die Stäbe (30) eingesetzt sind.

7. Gleitlager nach Anspruch 6,
dadurch gekennzeichnet, daß die Bohrungen (2) sich zum Außenseitenabschnitt (4) hin erweiternd angefast sind.

8. Gleitlager nach Anspruch 6,
dadurch gekennzeichnet, daß die Bohrungen (12) mit deren Durchmesser erweiternden, in den Außenseitenabschnitt (4) mündenden, abgerundeten Rändern (18) versehen sind.

9. Gleitlager nach mindestens einem der Ansprüche 6 bis 8,
dadurch gekennzeichnet, daß die Bohrungen (2) als Sacklöcher ausgebildet sind.

10. Gleitlager nach mindestens einem der vorhergehenden Ansprüche,
dadurch gekennzeichnet, daß der andere Lagerpartner (Auflagerklotz oder Lagerbock) eine von einer Stahllegierung gebildete Lagerfläche aufweist, während der die Stäbe enthaltende Lagerpartner (Lagerbock oder Auflagerklotz) aus einer Bronzelegierung besteht.

11. Gleitlager nach Anspruch 10,
dadurch gekennzeichnet, daß die von der Stahllegierung gebildete Lagerfläche geschliffen ist.

12. Gleitlager nach Anspruch 10 oder 11,
dadurch gekennzeichnet, daß die Stahllegierung eine harte Stahllegierung ist.

13. Gleitlager nach mindestens einem der Ansprüche 10 bis 12,
dadurch gekennzeichnet, daß die Stahllegierung eine nichtrostende Stahllegierung ist.

14. Gleitlager nach mindestens einem der vorhergehenden Ansprüche,
dadurch gekennzeichnet, daß die Stäbe (30) in senkrecht zur (bevorzugten) Bewegungsrichtung verlaufenden Reihen angeordnet sind, wobei die Stäbe (30) benachbarter Reihen um das halbe Teilungsmaß gegeneinander versetzt sind.

## Claims

1. Slide bearing for transmitting high bearing forces under small and slow relative movements between the opposing bearing parts, particularly as a bearing support for hatchway covers or similar on board ships, comprising a bearing seat (1; 1'; 1'') with a substantially planar bearing surface and a bearing block, whose bearing surface rests in substantially planar contact with the bearing surface of the bearing seat (1; 1'; 1''), wherein rods (30) made of a friction reducing material and extending substantially perpendicular to the bearing surface are embedded in the bearing seat (1; 1'; 1'') or the bearing block,
characterised in that the outer part (4) comprising the bearing surface of either the bearing seat (1'') or bearing block is substantially surrounded by a raised edge (20).

2. Sliding bearing according to Claim 1,
characterised in that the rods (30) protrude above the outer part (4) comprising the bearing surface of the bearing seat (1'') or bearing block, such that after a first loading of the sliding bearing the outer part (4) including the raised edge (20) is substantially completely covered by the material of the rods (30), so that the material forms the bearing surface.

3. Sliding bearing according to Claim 1 or 2,
characterised in that the rods (30) consist of glass fibre reinforced polytetrafluoroethylene (PTFE).

4. Sliding bearing according to Claim 1 or 2,
characterised in that the rods (30) consist of polytetrafluoroethylene (PTFE) mixed with glass powder.

5. Sliding bearing according to Claim 3 or 4,
characterised in that the polytetrafluoroethylene is mixed with approximately 25% glass by volume.

6. Sliding bearing according to at least one of Claims 1 to 5,
characterised in that the rods (30) are round and boreholes (2; 12), in which the rods (30) are embedded, are provided in the outer part (4) comprising the bearing surface of the bearing seat (1; 1'; 1'') or bearing block.

7. Sliding bearing according to Claim 6,
characterised in that the boreholes (2) are tapered such that they widen towards the outer part (4).

8. Sliding bearing according to Claim 6,
characterised in that the boreholes (2) are provided with chamfered sides (18), which run into the outer part (4) as the diameter increases.

9. Sliding bearing according to at least one of Claims 6 to 8,
characterised in that the boreholes (2) are formed as blind holes.

10. Sliding bearing according to at least one of the preceding Claims,
characterised in that the second opposing bearing part (bearing block or bearing seat) has a bearing surface formed from a steel alloy, while the first opposing bearing part (bearing seat or bearing block) containing the rods consists of a bronze alloy.

11. Sliding bearing according to Claim 10,
characterised in that the bearing surface formed from a steel alloy is ground.

12. Sliding bearing according to Claim 10 or 11,
characterised in that the steel alloy is a hard steel alloy.

13. Sliding bearing according to at least one of Claims 10 to 12,
characterised in that the steel alloy is a stainless steel alloy.

14. Sliding bearing according to at least one of the preceding Claims,
characterised in that the rods (30) are arranged in rows which run perpendicular to the (preferred) direction of movement, whereby the rods (30) of neighbouring rows are offset from each other by an amount equal to half the spacing between rods in a row.

## Revendications

1. Palier lisse destiné à transmettre des forces de support élevées avec des mouvements relatifs faibles et lents entre les partenaires de support, en particulier sous forme de supports pour les panneaux de cale, ou des dispositifs analogues, à bord des navires, comprenant un sabot d'appui (1 ; 1' ; 1''), muni d'une surface d'appui sensiblement plane, et un tasseau de support, dont la surface d'appui entre en contact de manière sensiblement plane avec la surface d'appui du sabot d'appui (1 ; 1' ; 1''), des tiges (30), réalisées dans un matériau anti-friction, étant insérées dans le sabot d'appui (1 ; 1, ; 1'') ou dans le tasseau de support, presque perpendiculairement à la surface d'appui et se prolongeant au moins jusqu'à la surface d'appui,
caractérisé en ce que la face extérieure (4) présentant la surface d'appui du sabot d'appui (1'') ou du tasseau de support est entourée pour l'essentiel d'un bord (20) en saillie.

2. Palier lisse selon la revendication 1, caractérisé en ce que les tiges (30) sont en saillie au-dessus de la face extérieure (4) présentant la surface d'appui du sabot d'appui (1'') ou du tasseau de support, de telle sorte que, dès la première sollicitation du palier lisse, la face extérieure (4) ainsi que le bord (20) saillant sont sensiblement recouverts en totalité par le matériau des tiges (30), de telle sorte que ce dernier constitue la surface d'appui.

3. Palier lisse selon la revendication 1 ou 2, caractérisé en ce que les tiges (30) sont réalisées dans un polytétrafluoréthylène (PTFE) renforcé par des fibres de verre.

4. Palier lisse selon la revendication 1 ou 2, caractérisé en ce que les tiges (30) sont réalisées dans un polytétrafluoréthylène (PTFE) mélangé à du verre pulvérisé.

5. Palier lisse selon la revendication 3 ou 4, caractérisé en ce que le polytétrafluoréthylène comprend environ 25 % en volume de verre.

6. Palier lisse selon au moins l'une quelconque des revendications 1 à 5, caractérisé en ce que les tiges (30) sont des tiges rondes et en ce que la face extérieure (4) présentant la surface d'appui du sabot d'appui (1 ; 1' ; 1'') ou du tasseau de support est munie de forures (2; 12), dans lesquelles sont insérées les tiges (30).

7. Palier lisse selon la revendication 6, caractérisé en ce que les forures (2) sont chanfreinées en s'élargissant vers la face extérieure (4).

8. Palier lisse selon la revendication 6, caractérisé en ce que les forures (12) sont munies de bords arrondis (18) élargissant le diamètre desdites forures et débouchant dans la face extérieure (4).

9. Palier lisse selon au moins l'une quelconque des revendications 6 à 8, caractérisé en ce que les forures (2) sont des trous borgnes.

10. Palier lisse selon au moins l'une quelconque des revendications précédentes, caractérisé en ce que l'autre partenaire de support (tasseau de support ou sabot d'appui) est muni d'une surface d'appui réalisée dans un alliage d'acier, alors que le partenaire de support contenant les tiges (sabot d'appui ou tasseau de support) est réalisé dans un alliage au bronze.

11. Palier lisse selon la revendication 10, caractérisé en ce que la surface d'appui réalisée dans l'alliage d'acier est polie.

12. Palier lisse selon la revendication 10 ou 11, caractérisé en ce que l'alliage d'acier est un alliage d'acier dur.

13. Palier lisse selon au moins l'une quelconque des revendications 10 à 12, caractérisé en ce que l'alliage d'acier est un alliage d'acier inoxydable.

14. Palier lisse selon au moins l'une quelconque des revendications précédentes, caractérisé en ce que les tiges (30) sont disposées en rangées perpendiculaires au sens (préféré) du mouvement, les tiges (30) des rangées voisines étant décalées les unes par rapport aux autres d'une valeur égale à une demie forure.
